(19) Europäisches Patentamt
European Patent Office
Office européen des brevets

(11) Publication number: **0 084 437**
**A1**

(12) **EUROPEAN PATENT APPLICATION**

(21) Application number: 83300162.1

(22) Date of filing: 13.01.83

(51) Int. Cl.[3]: C 07 C 69/593
C 07 C 67/475
//B01J27/08

(30) Priority: 13.01.82 GB 8200934

(43) Date of publication of application: 27.07.83 Bulletin 83/30

(84) Designated Contracting States: BE DE FR GB IT NL

(71) Applicant: BP Chemicals Limited
Belgrave House 76 Buckingham Palace Road
London, SW1W 0SU(GB)

(72) Inventor: Cameron, Robert
BP Chemicals Limited Chertsey Road
Sunbury-on-Thames Middlesex, TW16 7LN(GB)

(74) Representative: Harry, John et al,
BP INTERNATIONAL LIMITED Patents and Licensing Division Chertsey Road
Sunbury-on-Thames Middlesex TW16 7LN(GB)

(54) **Dismutation of functionalised olefins.**

(57) The present invention is a method for the (co)dismutation of a feedstock comprising functional olefins. The feedstock, which has at least one terminally unsaturated ester, is dismuted using a hybrid metathesis catalyst composition which has a tungsten halide and an organometallic compound of the formula $R_3R^1M$ wherein, $R^1$ is a group selected from an alkyl and an aryl group, R is a group selected from $R^1$ and a hydrogen atom, and M is a metal atom capable of exhibiting more than one oxidation state, on a support.

The activity of this heterogeneous catalyst composition for dismuting terminally unsaturated ester is vastly superior to the corresponding homogeneous systems.

EP 0 084 437 A1

# DISMUTATION OF FUNCTIONALISED OLEFINS

The present invention relates to (co)dismutation of functionalised terminal olefins using a hybrid metathesis catalyst composition.

Dismutation of internal olefins by hybrid tungsten-based metathesis catalysts is known. A paper by Mol,J.C. et al entitled, "Hybrid Tungsten-Based Metathesis Catalysts" in the Journal of Molecular Catalysis, 8 (1980), 185-190 discloses that homogeneous catalyst systems are better for dismuting internal olefinic compounds than the hybrid heterogeneous systems and this relative lack of activity of heterogeneous systems is said to be even more pronounced in the case of unsaturated esters such as methyl oleate.

It has now been found that the activity of heterogeneous catalyst compositions for dismuting unsaturated esters which are terminally unsaturated is vastly superior to the corresponding homogeneous systems.

Accordingly, the present invention is a method for the dismutation of a feedstock comprising at least one terminally unsaturated ester using a hybrid metathesis catalyst composition which comprises a tungsten halide and an organo-metallic compound of the formula $R_3R^1M$ wherein, $R^1$ is a group selected from an alkyl and an aryl group, R is a group selected from $R^1$ and a hydrogen atom, and M is a metal atom capable of exhibiting more than one oxidation state, on a support.

The term "dismutation" as used herein and throughout the specification is meant to include both self-dismutation and

codismutation with other unsaturated esters.

In the hybrid metathesis catalyst composition the tungsten halide is preferably tungsten hexa-halide, most preferably tungsten hexa-chloride.

The organo-metallic compound is preferably selected from a monohydrotrialkyl-, a tetraalkyl-, a monohydrotriaryl- and a tetraaryl-derivative of the metal. The metal atom M is suitably selected from those in Groups IIB, IIIA and IVA of the Periodic Table of Elements in the 44th Edition of the "Handbook of Chemistry and Physics", Ed. Hodgman, C.D. et al, pp 448 and 449 (1963) and published by The Chemical Rubber Publishing Co., Ohio, U.S.A. The metal is preferably selected from zinc, mercury, aluminium, tin, germanium and lead. The organo-metallic compound is most preferably tetra-methyl-tin.

The support used is preferably silica.

The hybrid metathesis catalyst may be prepared by conventional techniques. For instance, a suspension of tungsten hexachloride and the support eg silica in a solvent such as dichloroethane may be refluxed, allowed to cool, separated from the supernatant liquid and washed repeatedly with the solvent. The resultant tungsten hexa-chloride-silica catalyst for instance is deep red in colour.

The terminally unsaturated ester is suitably a monoester and preferably one in which the terminal unsaturation is remote from the functional carboxyl group. The ester may be derived from an unsaturated carboxylic acid which has at least 4 carbon atoms, preferably between 5 and 30 carbon atoms.

The terminally unsaturated esters may be codismuted with internally unsaturated esters to produce the corresponding products. Specific examples of internally unsaturated esters which may be codismuted include methyl hex-3-enoate and ethyl pent-3-enoate.

The dismutation reaction is suitably carried out by contacting the unsaturated ester with the hybrid metathesis catalyst composition at elevated temperature, preferably by refluxing the reactant ester in a solvent such as a chlorinated hydrocarbon in the presence of the catalyst. The dismutation products are then separated and recovered by conventional techniques.

The process of the present invention together with the relevant Comparative Tests are described below.

Examples and Comparative Tests

Preparation of Catalyst

The materials used were as follows pretreated as indicated.

Silica gel (Davison Grace 952,B.E.T. surface area 330 $cm^2g^{-1}$) was activated by heating for 24 hours at 823K in flowing nitrogen and stored under nitrogen. $WCl_6$ was used as supplied (Koch Light). Tetramethyltin (Aldrich) and Nonane (Aldrich) were dried over activated molecular sieves (3 Å + 4 Å). Dichloroethane was refluxed over activated molecular sieves (3 Å + 4 Å) and distilled before use. Methyl pentenoate and undecylenoate were prepared from the corresponding acids and distilled before use. All reactions were carried out in dried glassware under nitrogen.

To $WCl_6$ (0.4g, 1 x $10^{-3}$ mol) dissolved in dichloroethane (20ml) was added Silica gel (4g) (Davison Grace 952). The dark blue suspension was allowed to stand, with occasional stirring for eighteen hours. The supernatant liquid was decolourised after a period of several hours. The resulting suspension was refluxed for 10 minutes, allowed to cool, the supernatent liquid removed and the solid washed repeatedly with dichloroethane (3 x 20ml). The $WCl_6$ - $SiO_2$ catalyst so formed was deep red in colour.

Analysis of the catalyst showed a W content of 4% wt/wt representing a loading of 0.08g $WCl_6$ per g silica.

Examples 1 - 3

Metathesis of Methyl pent-4-enoate

$2(CH_2 = CHCH_2CH_2CO_2CH_3)$ in equilibrium with

$CH_3O_2CCH_2CH_2CH = CHCH_2CH_2CO_2CH_3 + CH_2 = CH_2$

General procedure for hybrid reaction:-

To a suspension of $WCl_6$ on silica in dichloroethane was added nonane, tetramethytin and methylpentenoate. The resulting suspension was then refluxed at atmospheric pressure and 80°C, the supernatant remaining clear throughout, while the solid becomes dark blue.

Results

| $WCl_6$ : $Me_4Sn$ : Ester | % Yield |
|---|---|
| 1 : 2 : 70 | 85 |
| 1 : 2 : 120 | 75 |
| 1 : 2 : 260 | 29 |

Comparative Tests (not according to the invention)

General procedure for homogeneous reaction:

To a solution of $WCl_6$ in dichloroethane was added, nonane (internal standard), tetramethyl tin (co-catalyst) and methyl pentenoate. The resulting dark blue solution was then refluxed as before.

Results

| $WCl_6$ : $Me_4$ Sn : Ester | % Yield |
|---|---|
| (i)1 : 2 : 75 | 38 |
| (ii)1 : 2 : 290 | 21 |

Example 4

Metathesis of Methyl Undecyl-10-enoate

2 ($CH_2$ = CH $(CH_2)_8$ - $CO_2CH_3$) in equilibrium with

$CH_3O_2C(CH_2)_8CH$ = CH $(CH_2)_8$ - $CO_2CH_3$ + $CH_2$ = $CH_2$

The reaction conditions and procedures were as described under Examples 1-3 above.

Results

| Catalyst | % Conversion after 1 hour | % Conversion after 6 hours |
|---|---|---|
| $WCl_6/SiO_2/Me_4Sn$ | 79 | 96 |

In all cases $WCl_6$ : $Me_4Sn$ : Ester = 1 : 2 : 25

Comparatives Test (iii)

The procedure of Examples 4 was repeated using a homogeneous catalyst sytem (without silica).

Results

| Catalyst | % Conversion after 1 hour | % Conversion after 6 hours |
|---|---|---|
| $WCl_6/Me_4Sn$ | 65 | 80 |

Examples 5 and 6 and Comparative Tests (iv)-(ix)

These were carried out using different esters but using respectively the same procedure as in Examples 1-3 above and Comparative Tests (i) and (ii) above. The results are tabulated below:

TABLE 1

| | Ester | Catalyst[a] | Yield (%)[c] | Products |
|---|---|---|---|---|
| (iv) | $C_8$-C=C-$C_7$COOC | $WCl_6/Me_4Sn$ | 52 | $C_8$-C=C-$C_8$ + COOC-$C_7$-C=C-$C_7$-COOC |
| (v) | " | $WCl_6/SiO_2/Me_4Sn$ | 2 | |
| (vi) | C=C-$C_9$COOC | $WCl_6/Me_4Sn$ | 72 | C=C + COOC-$C_9$-C=C-$C_9$-COOC |
| 5 | " | $WCl_6/SiO_2/Me_4Sn$ | 96 | |
| (vii) | C-C-C=C-C-COOC | $WCl_6/Me_4Sn$ (b) | 38 | $C_2$-C=C-$C_2$ + COOC-C-C=C-C-COOC |
| (viii) | " | $WCl_6/SiO_2/Me_4Sn$ (b) | - | |
| (ix) | C=C-C-C-COOC | $WCl_6/Me_4Sn$ | 65 | C=C + COOC-C-C-C=C-C-C-COOC |
| 6 | " | $WCl_6/SiO_2/Me_4Sn$ | 80 | |

a) (ester)/($WCl_6$) = 25; ($WCl_6$)/($Me_4Sn$) = 0.33; solvent:dichloroethane
b) ($WCl_6$)/($Me_4Sn$) = 0.5
c) after six hours at 80°C

Claims:

1. A method for the (co)dismutation of a feedstock comprising at least one terminally unsaturated ester using a hybrid metathesis catalyst composition which comprises a tungsten halide and an organo-metallic compound of the formula $R_3R^1M$ wherein, $R^1$ is a group selected from an alkyl and an aryl group, R is a group selected from $R^1$ and a hydrogen atom, and M is a metal atom capable of exhibiting more than one oxidation state, on a support.

2. A method according to claim 1 wherein the tungsten halide is a tungsten hexa-halide.

3. A method according to claim 1 wherein the organo-metallic compound is selected from a monohydrotrialkyl-, a tetraalkyl-, a monohydrotriaryl- and a tetraaryl-derivative of the metal.

4. A method according to claim 1 wherein the metal atom M is selected from those in Groups IIB, IIIA and IVA of the Periodic Table of Elements as herein defined.

5. A method according to any one of the preceding claims wherein the metal is selected from zinc, mercury, aluminium, tin, germanium and lead.

6. A method according to any one of the preceding claims wherein the organo-metallic compound is tetra-methyl-tin.

7. A method according to any one of the preceding claims wherein the support used is silica.

8. A method according to any one of the preceding claims wherein the terminally unsaturated ester is a monoester.

9. A method according to claim 8 wherein the terminally unsaturated ester is one in which the terminal unsaturation is furthest from the functional carboxyl group.

0084437

10. A method according to any one of the preceding claims wherein the terminally unsaturated ester is codismuted with an internally unsaturated ester.

0084437

European Patent Office

# EUROPEAN SEARCH REPORT

Application number

EP 83 30 0162

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | FR-A-2 252 314 (JAPAN SYNTHETIC RUBBER CO.) *Page 1, line 36 - page 2, line 10; page 4, line 19 - page 5, line 25; page 7, line 9 - page 8, line 8; page 12; example 6* | 1-6,8-10 | C 07 C 69/593<br>C 07 C 67/475//<br>B 01 J 27/08 |
| A | FR-A-2 389 588 (RHONE-POULENC) *Page 2, line 14 - page 3, line 40; pages 8-9; examples 4,5* | 1-6,8-10 | |
| | | | TECHNICAL FIELDS SEARCHED (Int. Cl. 3) |
| | | | C 07 C 69/00<br>C 07 C 67/00 |

The present search report has been drawn up for all claims

| Place of search | Date of completion of the search | Examiner |
|---|---|---|
| THE HAGUE | 28-02-1983 | KINZINGER J.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO Form 1503 03.82